(19) **Europäisches Patentamt**

**European Patent Office**

**Office européen des brevets**

(11) **EP 1 031 810 A2**

(12) **EUROPEAN PATENT APPLICATION**

(43) Date of publication:
**30.08.2000 Bulletin 2000/35**

(51) Int. Cl.⁷: **F28F 19/01**, F28D 7/00,
F28F 21/06, B01D 29/15,
B01D 29/11, B01D 29/01

(21) Application number: **00103663.1**

(22) Date of filing: **22.02.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **26.02.1999 US 260524**

(71) Applicant: **Nagaoka, Tadayoshi
Tondabayashi-shi, Osaka-fu (JP)**

(72) Inventors:
• **Nagaoka, Tadayoshi
Tondabayashi-shi, Osaka-fu (JP)**
• **Weismantel, Guy Edward
Kingwood, Texas 7325 (US)**

(74) Representative:
**Dallmeyer, Georg, Dipl.-Ing. et al
Patentanwälte
Von Kreisler-Selting-Werner
Bahnhofsvorplatz 1 (Deichmannhaus)
50667 Köln (DE)**

(54) **Filter-heat exchanger**

(57)     A filter-heat exchanger (2) includes a plurality of hollow wires (3) arranged in parallel with a slit (4) of a predetermined width formed between adjacent hollow wires (3). The hollow wires (3) each have an inlet and an outlet for a heating/cooling fluid whereby the heating/cooling fluid flows through the hollow wires (3) and fluid to be filtered flows through the slits (4) from one side of the parallelly arranged hollow wires (3) to the other side of thereof. The filter-heat exchanger (2) can accomplish filtering and heat exchanging processes simultaneously in a single step.

FIG. 3

EP 1 031 810 A2

## Description

Background of the Invention

This invention relates to a filter-heat exchanger for use in industrial applications including process, power and pipeline applications.

In a process industry, for example, where heating or cooling of fluid to be treated and filtering of the fluid are necessary, the fluid is generally subjected to two separate processing steps of (1) heating or cooling and (2) filtering and therefore two separate systems or apparatus for accomplishing the two steps are required. In some cases this requirement for the two separate systems or apparatus causes difficulty in availability of installment space particularly where the space available for the apparatus is limited.

It is, therefore, an object of the invention to provide a device which can eliminate such inconvenience by accomplishing heating or cooling and filtering in one step instead of the conventional two step processing.

Summary of the Invention

For achieving the above described object of the invention, there is provided a filter-heat exchanger comprising a plurality of hollow wires arranged in parallel with a slit of a predetermined width formed between adjacent hollow wires, said hollow wires each having an inlet and an outlet for a heating/cooling fluid whereby said heating/cooling fluid flows through said hollow wires and fluid to be filtered flows through said slits from one side of the parallelly arranged hollow wires to the other side thereof.

According to the invention, the filter-heat exchanger can accomplish heating or cooling and filtering in one step instead of the conventional two separate steps and, accordingly, space required is drastically saved, apparatus for accomplishing the required processing is simplified and the processing cost is also saved.

The hollow wires may be arranged generally in the form of a tube or may be arranged in the form of a flat plate.

In one aspect of the invention, the hollow wires are made of shaped wires. Among the shaped wires, a wedge wire is a preferable one. By employing the shaped wires instead of a round tube, (1) the surface area of each wire which comes into contact with the fluid to be filtered increases as compared with the case where a round tube is used, (2) blocking of the slit can be prevented more effectively than in the case of employing the round tube and (3) welding of support rods to the wires are facilitated as compared with the case of employing the round tube.

In another aspect of the invention, there is provided a filter-heat exchanger comprising a coiled hollow wire with a helical slit of a predetermined width formed between axially adjacent portions of the hollow wire, said coiled hollow wire having an inlet and an outlet for a heating/cooling fluid whereby said heating/cooling fluid flows through said coiled hollow wire and fluid to be filtered flows through said slit from outside of the coiled hollow wire to inside thereof or vice versa.

In one aspect of the invention, the filter-heat exchanger may further comprise hollow support rods arranged substantially in crossing direction to the hollow wire, said hollow support rods having an inlet and an outlet for the heating/:cooling fluid whereby the heating/cooling fluid flows also through the hollow support rods.

In another aspect of the invention, there is provided a filter-heat exchanger comrising a container having an inlet for introducing a fluid to be filtered, a coiled hollow wire provided in said container having a helical slit of a predetermined width formed between axially adjacent portions of the hollow wire, having an inlet and and an outlet for a heating/cooling fluid and having an outlet for delivering out treated fluid, a heating/cooling fluid source connected to the heating/cooling fluid inelt of said coiled hollow wire for supplying the hetaing/cooling fluid to said coiled hollow wire; and a heating/cooling fluid collecting tube connected to the heating/cooling fluid outlet of said coiled hollow wire for collecting the heating-cooling fluid from said coiled hollow wire.

In still another aspect of the invention, the filter-heat exchanger further comprises a temperature control means for controlling the temperature of the heating/cooling fluid for controlling the width of the slit of coiled hollow wire.

By controlling the temperature of the heating/cooling fluid flowing though the hollow wire, the hollow wire is caused to expand or contract and the outer diameter of the hollow wire thereby is changed with resulting change in the width of the slit. By so doing, the filtering capability of the filter heat exchanger is modified to remove larger or smaller particles while at the same time acting as a heat exchanger.

These and other features of the invention will become more apparent from the detailed description made below with reference to the accompanying drawings.

Brief Description of the Drawings

In the accompanying drawings,

Fig. 1 is a partial perspective view of a hollow wire which is a component of the filter-heat exchanger according to the invention;
Figs. 2A to 2F are views illustrating various cross sections of hollow wires;
Fig. 3 is a perspective view of one embodiment of the filter-heat exchanger made according to the invention;

Fig. 4 is a view explanatory of a state of deposition of suspended solid particles in fluid to be treated to the surface of the hollow wire.

Fig. 5 is a partial perspective view of another embodiment of the filter-heat exchanger made according to the invention;

Fig. 6 is a perspective view of another embodiment of the filter-heat exchanger made according to the invention;

Fig. 7 is a partial view of a loop type hollow wire;

Fig. 8 is a partial view of a hollow wire having projections for forming slits;

Fig. 9 is a perspective view showing another embodiment of the filter-heat exchanger made according to the invention;

Fig. 10 is a sectional view showing another embodiment of the filter-heat exchanger made according to the invention;

Fig. 11 is a sectional view showing a conventional method for producing a heavy oil; and

Fig. 12 is a sectional view showing another embodiment of the filter-heat exchanger made according to the invention.

Detailed Description of the Invention

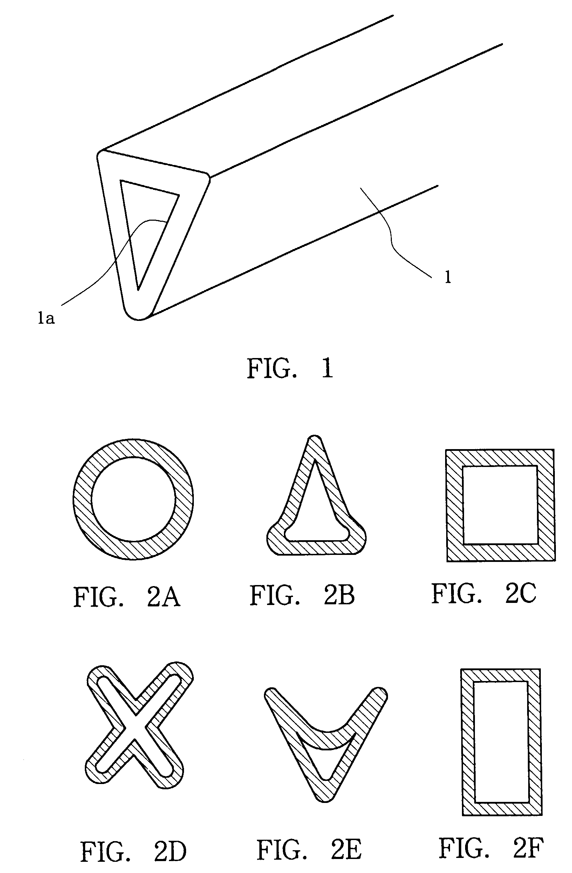

Fig. 1 illustrates a hollow wedge wire 1 as an example of a hollow wire which is a component of the invention. A heating or cooling fluid flows through the hollow space 1a formed throughout the length of the hollow wire 1 while a fluid to be filtered flows through a slit formed between adjacent hollow wires 1. The hollow wire may be made of any metal or alloy or ceramic or polymeric material or a composite material of these materials.

The fluid flowing through the hollow wire 1 is a heat transfer fluid or a cold transfer fluid. The heating or cooling fluid and fluid to be filtered can either be a liquid or a gas and can be a functional fluid, water, organic material, inorganic material, or combination of any of all of these categories. The fluids which flow inside and outside of the hollow wire 1 include the following combinations:

| Inside the hollow wire | Outside the hollow wire |
| --- | --- |
| liquid | liquid |
| gas | gas |
| liquid | gas |
| gas | liquid |
| liquid-particulate | liquid-particulate |
| liquid-particulate | gas-particulate |

(continued)

| Inside the hollow wire | Outside the hollow wire |
| --- | --- |
| gas-particulate | gas-particulate |
| gas-particulate | liquid-particulate |
| liquid-particulate | gas |
| liquid-particulate | liquid |
| gas-particulate | gas |
| gas-particulate | liquid |
| gas | liuqid-particulate |
| liquid | liquid-particulate |
| gas | gas-particulate |
| liquid | gas-particulate |

The fluid flowing inside or outside the hollow wire can be single or multi-component and of either single-phase, double-phase or multi-phase flow. The material which constitutes the fluid can be moved by natural flow, pump, blower, compressor, or pneumatic devices.

In this specification, "particulate" refers to either one or more of the following: A solid particle, a flexible or gelatinous particle, an oil (or organic) particle (in water), a water particle (in oil or organic fluid), a colloid, an emulsion particle, or any other solid or liquid particle. Particulate includes particles of all sizes from submicron level to particles of large sizes up to twelve inches in diameter or cross section. For purposes of the invention, the submicron particle can be ionic or atomic in nature. The particle can be gelatinous, or oil, or oil-like, hard or soft density, and of any size that will fit through or flow through any opening of the apparatus.

The particulate covered by the invention can be uniform or non-uniform in nature such as, but not limited to:

| Uniform | Non-uniform |
| --- | --- |
| crystals | ground material |
| precipitates | precipitates |
| catalysts | catalysts |
| frozen products | food products |
| sludges | sludges |
| slurries | slurries |
| ions | resins |
| bubbles | bubbles |
| condensates | crushed material |
| vapors | milled material |

| Uniform | Non-uniform |
|---|---|
| pellets | pellets |
| glass | cullet |
| pigments | pigments |
| chemicals, organic | chemicals, organic |
| chemicals, inorganic | chemicals, inorganic |
| atoms | minerals |
| radicals | gels |
| metals | metals |

The separation that is effected by the filter-heat exchanger can be from filtration or other separation method such as screening, resistance, coalescence, centrifugation, or tortuous path. Such separation can be effected with or without pressure.

The heat transfer rating of the filter-heat exchanger will be based on the materials handled, the configurations utilized, the size of the components and system size. The temperature range covered by the invention are from - 459.8 degrees Fahrenheit (-273.2°C) to +4000 degrees Fahrenheit (+2204.4°C). This temperature range includes th cryogenic level of liquid nitrogen ($N_2$) (-180°C, 0.1 MPa) to the temperatures experienced in supercritical water oxidation (650°C, 24.8 MPa).

It is an important feature of the present invention to utilize thermal expansion or contraction of the hollow wire 1 to control the width of the slit between the adjacent hollow wires and thereby control the size of a particle to be filtered out. All materials, especially metals, have a thermal expansion coefficient that is linear, or close to linear, at the risk-free working temperatures of the material. In its simple form, this basic heat transfer function is utilized:

$$H = UAt\triangle t$$

Where H is the teat transferred, U is the overall haat transfer coefficient, A is the surface area of the hollow wire, and $\triangle$ t is the log-mean-temperature difference.

By selecting the original width of the slit and temperatures of the heating or cooling fluid and the fluid to be filtered properly, the width of the slit can be controlled to a desired value.

This feature of the invention has also the advantage that, by varying the temperature of the fluid flowing through the hollow wires, the slit opening can be made wider or smaller and, in the course of opening of the slit, particles clogged in the slit can become loose and thereby removed in either direction (forward flow or backward flow) to clean and/or unclog the filter-heat exchanger.

In addition, the material outside the hollow wire can be hot or cold providing a flow of heat or cold through the hollow wire and into the fluid inside the hollow wire. In this mode, the unit can act as a condenser or evaporator while at the same time achieving filtration of the material outside the hollow wire if that is desirable (as in the case for some catalyst systems).

The shape of the hollow wire is not limited to the preferred wedge wire shape as shown in Fig. 1 but the hollow wire may be formed as a round tube sa shown in Fig. 2A, or formed in a cross-section as shown in Fig. 2B which is a modified hollow wedge wire with two depressed surfaces, a cross-section as shown in Fig. 2C which is a hollow square, a cross-section as showin in Fig. 2D which is a hollow X shape, a cross-section as shown in Fig. 2E which is a modified hollow wedge wire with one depressed surface, a cross-section as shown in Fig. 2F which is a hollow rectangular. The shape may also be oval, elliptical or otherwise shaped in a manner to achieve heat transfer while facilitating particulate removal.

The width of a slit between hollow wires should not be greater than the width (or outer diameter in the case of a round hollow wire) of the hollow wire. The greater the width or the outer diameter of the hollow wire, the greater is the inside space of the hollow wire and therefore the greater the efficiency of the heat exchange is. If the width of the slit exceeds the width of the hollow wire, the efficiency of heat exchange will decrease to an inappropriate degree in relation to the necessary width of the slit and this will be disadvantageous in the design of a filter-heat exchanger. For this reason, the width of the slit should preferably be two-thirds or less of the width (or outer diameter) of the hollow wire.

Some applications of the filter-heat exchanger according to the invention will now be described.

One application of the filter-heat exchanger is a cooling tower. A cooling tower is a familiar structure associated with cooling apparatus. The cooling tower generally moves a fluid (e.g., water) in a recirculating arrangement acting to eject heat to the atomoshpere. The cooling tower usually has a heat exchange apparatus in its fluid circuit with the fluid recirculated through the heat exchange media. The recirculating cooling tower and heat exchanger arrangement adds both heat and water vapor to the air transferred therethrough and generally requires a makeup water system as a great deal of cooling fluid will epaporate. The filter-heat exchanger of the invention can act as a heat exchanger and also a filter in this cooling tower system.

Thus, the filter-heat exchanger can be used in concert with a cooling tower or refrigeration systems or in concert with fired heaters or boilers on the basis of totally self-contained low pressure or high pressure closed loop or open loop systems to achieve heating, cooling, filtering, fluid-particle separations or combinations of these operations. This can be through continuous circulation, with or without phase changes and with or without pumping of the material through or around the filter-heat exchanger Circulation can be caused by convection enhanced by the enthalpy of phase changes inside the filter-heat exchanger.

The filter-heat exchanger can be also used as a boiler feedwater heater-filter to effect particulate removal from water prior to water goint to a boiler for the production of steam.

The filter-heat exchanger can also become a dryer for wet air or wet air gases or other fluids and can be tied to direct or indirect evaporative cooling. For air, the precise characterization or desired air temperature and humidity conditions are noted in a psychrometric chart. In that regard, the filter-heat exchanger can act as a filter or pre-filter plus cooler for intake air going to natural gas-fired turbines. The gas turbine design point is ISO 59° Fahrenheit (15 °C). The filter-heat exchanger can act as combination filter/cooler for natural gas-fired turbines reducing the normal two-step filtration and cooling operations into one step.

The filter-heat exchanger can be inserted into a piping or ducting to achieve particulate removal and/or transfer. It can be used as a dryer as a unit operation in process plants for dehydration (dehydrator) with or without the introduction of a desiccant filling material to achieve drying and filtration.

The filter-heat exchanger can be used as a coalescer with the packing material added through the shell side of an apparatus (either inside the hollow wire or outside the hollow wire or both) to accomplish coalescence through the condensation of vapors and/or vapors-plus-particulates flowing through the system.

The filter-heat exchanger can be filled with water (closed container) so that hollow wires containing coolant can freeze the water for later utilization of the ice for cooling. Thus, the filter-heat exchanger can be used as a freezer. This is an extrapolation of use of the device for isothermal storage (off-peak power/cooling/air conditioning).

The filter-heat exchanger can be utilized for selective freeze crystallization processing of any organic or non-organic liquids (for example xylenes separation and sea water-to-drinking water, respectively).

The filter-heat exchanger can also be used for particulate removal in hot or cold gases to include, but not limited to, stack gas from power plants, flares, smoke stacks, chimneys, and to any exhaust stream requiring permitting for particulate removal of Volatile Organic Compound (VOC) removal requiring permission by the United States Environmental Protection Agency. This includes use of the filter-heat exchanger in lieu of or as part of a system of any type of baghouse or electrostatic precipitator, cyclone system, scrubber incinerator or other type of air pollution control device.

Owing to the above described feature of the invention that the width of the slits between the hollow wires can be controlled at will by controlling the temperature of the heating/cooling fluid flowing through the hollow wires, the filter-heat exchanger is suitable for use in those systems that require close temperature tolerance while filtration takes place such as many pharmaceutical applications which require sensitive removal capabilities for flocculants, agglomerates, biological sludges, crystals, and similar solids of a soft or hard, flexible or non-flexible, crystalline or elastomeric nature.

For the same reason, the filter-heat exchanger is suitable for use in handling and/or separation of catalyst particulates and/or removal of catalyst fines from an apparatus which may be considered as a reactor plus filter-heat exchanger.

The filter-heat exchanger can also be used in an oil well for softening a heavy oil by heating it with the heat transfer media flowing through the hollow wire and thereby facilitating pumping of the heavy oil from the oil weill.

Applications of the filter-heat exchanger of the invention are not limited to the above but the filter-heat exchanger can be used for various other fluid-particle separation and heat exchanging operations in process and other industries, pipeline systems and water and wastewater treatment plants.

Description of Preferred Embodiments

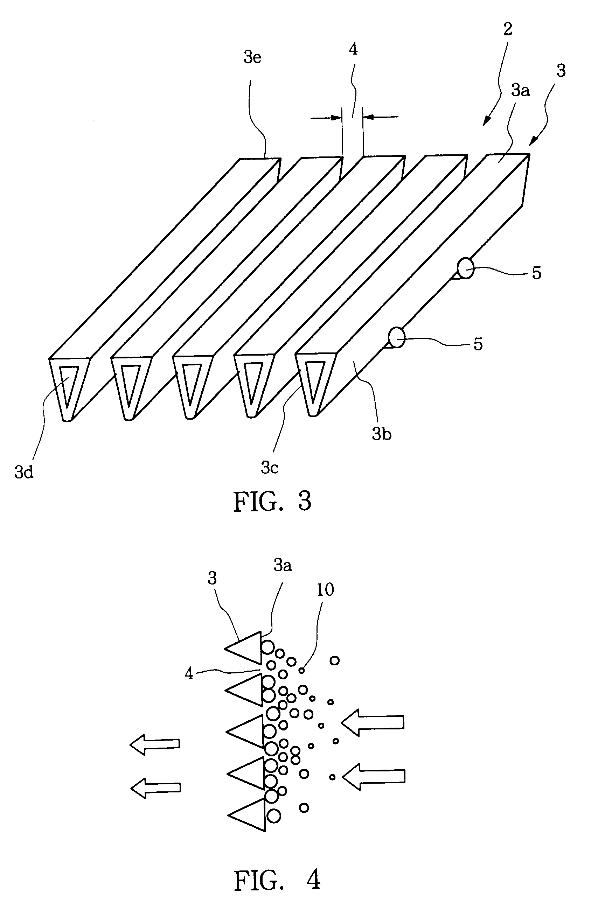

A preferred embodiment of the invention will now be described with reference to Figs. 3 to Fig. 12.

Fig. 3 shows an embodiment of the filter-heat exchanger of the invention. The filter-heat exchanger 2 has a plurality of hollow wedge wires 3 arranged in parallel with a slit 4 of a predetermined width formed between adjacent hollow wedge wires 3. The hollow wedge wires 3 are arranged with their one side 3a facing the upstream side of the flow of fluid which flows outside of the hollow wires 3 and two other sides 3b and 3c forming the slit 4 which widens in the direction of the flow of the fluid flowing outside the hollow wires 3. Thus, the surfaces 3a of the hollow wedge wires 3 form a common plane and the filter-heat exchanger 2 as a whole exhibits a flat plate-like configuration. The parallelly arranged hollow wires 3 are welded to support rods 5 which are arranged with a predetermined interval in crossing direction to the hollow wedge wires 3 whereby slits of these hollow wedge wires 3 are maintained. The hollow wedge wires 3 each have an inlet 3d and an outlet 3e for a heating/cooling fluid flowing through the hollow wedge wires 3. Thus, the heating/cooling fluid flows through the hollow wedge wires 3 and the fluid to be filtered flows through the slits 4 from the side 3a of the hollow wedge wires 3 to the other side of the hollow wedge wires 3.

In operation, fluid to be treated containing particles to be filtered out flows through the slits 4 of the hollow wedge wires 3 and, as shown in Fig. 4, particles 10 to be filtered out are deposited on the surfaces 3a of the hollow wedge wires 3.

The parallelly arranged hollow wedge wires 3 may be arranged generally in the form of a tube instead of the flat plate. In case the hollow wedge wires 3 are arranged in the form of a tube, rings can be used as the support rods 5.

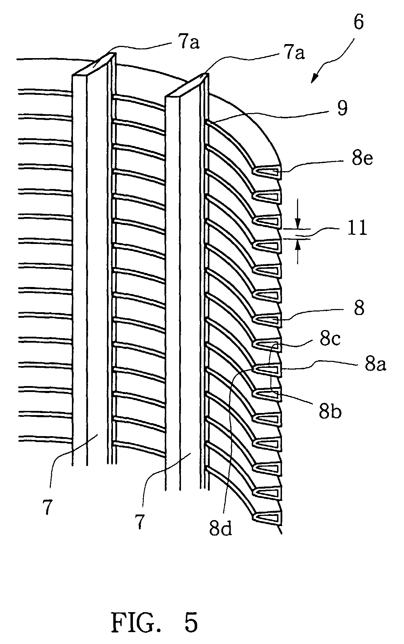

Fig. 5 shows another embodiment of the filter-heat exchanger of the invention, This filter-heat exchanger 6 has a coiled hollow wedge wire. The filter-heat exchanger 6 has support rods 7 extending in the axial direction of the filter-heat exchanger 6 and arranged generally cylindrically with a predetermined interval and having a projecting portion 7a radially outward end portion and a hollow wedge wire 8 wound spirally on the outside of the support rods 7 in substantially crossing direction to the support rdos 7. The hollow wedge wire 8 is arranged with its one side 8a facing outside and two other sides 8b and 8c forming a slit 11 which widens radially inwardly between adjacent wedge wire sides 8b and 8c and with an inward apex 8d of the hollow wedge wire 8 being welded to the projecting portions 7a of the support rods 7 at crossing points 9 of the hollow wedge wire 8 and the support rods 7. The coiled hollow wedge wire 8 has an inlet 8e and an outlet (not shown) for a heating/cooling fluid flowing though the hollow wedge wire 8. To the inlet 8e can be connected a heating/cooling fluid source for supplying heating/cooling fluid to the coiled hollow wedge wire 8. To the outlet of hollow wedge wire 8 can be connected a heating/cooling fluid collecting tube for collecting the heating-cooling fluid from the coiled hollow wedge wire 8. Thus the heating/cooling fluid flows though the coiled hollow wedge wire 8 and fluid to be treated containing particles to be filtered out flows through the slit 11 from the outside of the coiled hollow wedge 8 to the inside thereof, leaving the particles to be filtered out deposited on the side 8a of the coiled hollow wedge wire 8.

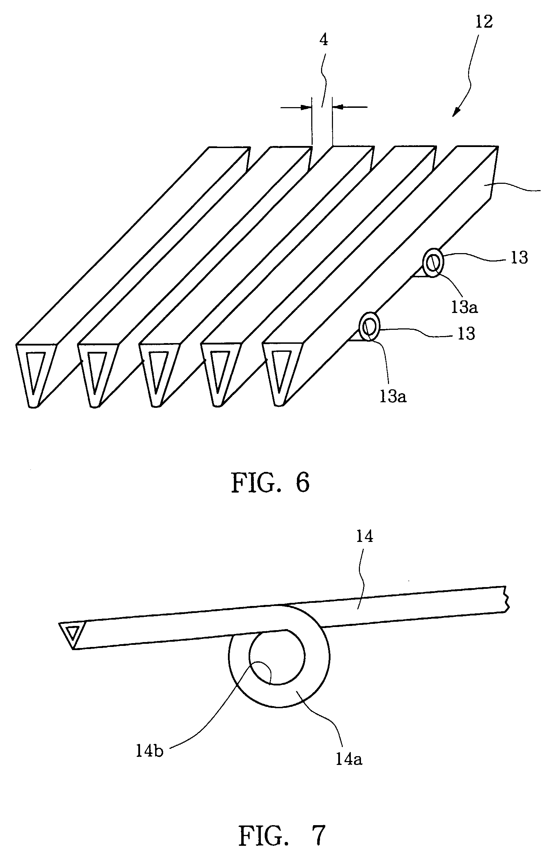

In the embodiments shown in Figs. 3 and 5, solid bars are used as the support rods 5 and 7. Alternatively, hollow support rods may be used instead of the support rods 5 and 7. Fig. 6 shows a modified embodiment of the embodiment shown in Fig. 3. In the embodiment of Fig. 6, the filter-heat exchanger 12 has parallelly arranged hollow wedge wires 3 forming slits 4 in the same manner as in the embodiment of Fig. 3 but, instead of solid bars, round tubes 13 are used as the support rods on which the hollow wedge wires 3 are welded. These hollow support rods 13 each have an inlet 13a and an outlet (not shown) for a heating/cooling fluid and the heating/cooling fluid can flow not only though the hollow wires 3 but also though the support rods 13. By this arrangement, the amount of the heating/cooling fluid used for the filter-heat exchanger can be increased and the heat exchanging efficiency can thereby be enhanced.

In the above described embodiments, the support rods 5 and 7 are welded to the hollow wires.

The support rods may alternatively be fixed to the hollow wires by means of a sealant. Furhter alternatively, the hollow wires may be fixed to support rods without using welding or sealant by employing a loop type hollow wedge wire 14 as shown in Fig. 7. The hollow wedge wire 14 has a loop portion 14a and a support rod can be inserted in the hole 14b to fix the hollow wedge wire 14 to the support rod.

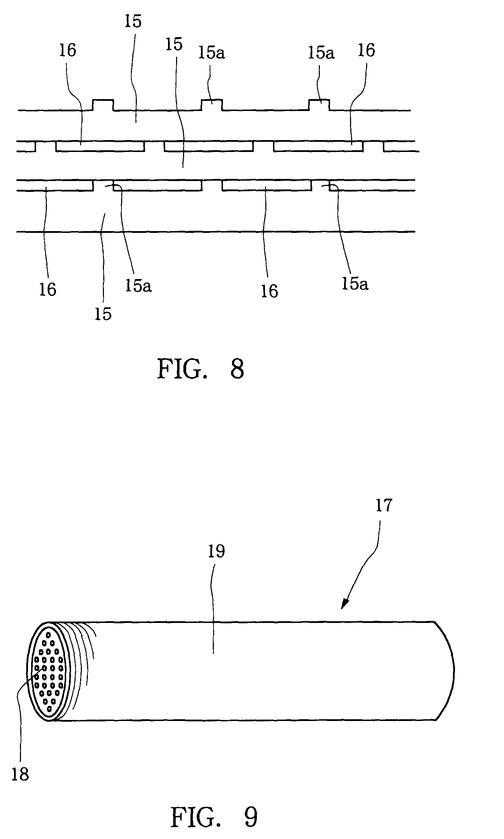

In the embodiment of Fig. 5 which uses the coiled hollow wedge wire, a coiled wedge wire 15 as shown in Fig. 8 may be used as the coiled hollow wedge wire. This hollow wedge wire 15 has a plurality of projections 15a formed at a predetermined interval one one side thereof and necessary slits 16 are provided by abutment of these projections 15a to the opposing surface of the wire 15 without using support rods.

Arrangement of hollow parallel wires or a coiled hollow wire are not limited to the above described embodiments but other arrangement such as knitted wire and weaved wire can be employed.

Fig. 9 shows another embodiment of the filter-heat exchanger of the invention. In this filter-heat exchanger 17, hollow fiber 18 is filled in a coiled hollow wedge wire 19 which is of the same configuration and structure as the coiled hollow wedge wire 6 of Fig. 5. This hollow fiber 18 functions to filter out particles of small diameters which enter through the slits of the coiled hollow wedge wire 19. The hollow fiber 18 may be provided outside of the coiled hollow wedge wire 19 in a manner to surround the coiled hollow wedge wire 19 in case where fluid to be filtered flows from the inside of the coiled hollow wedge wire 19 to the outside thereof.

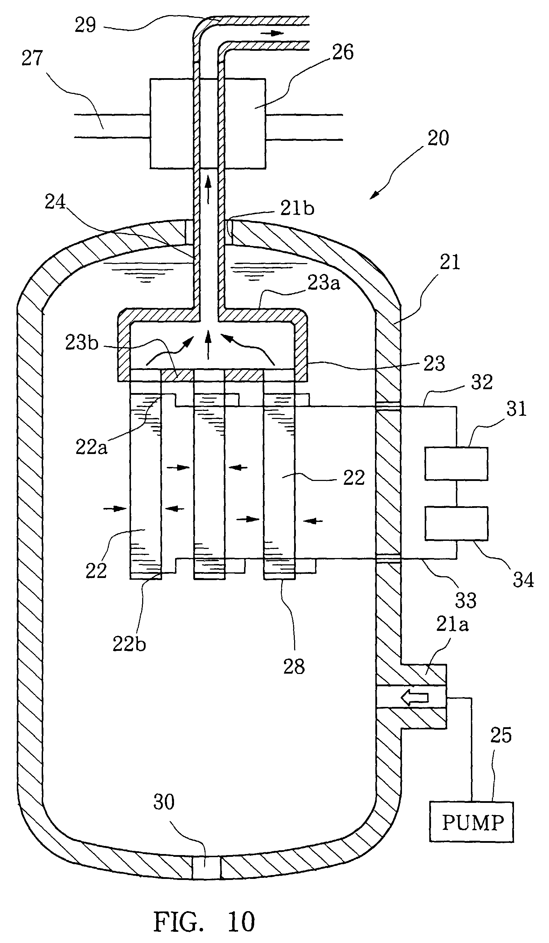

Fig. 10 shows another embodiment of the filter-heat exchanger of the invention. A filter-heat exchanger 20 has a container 21 having a circular cross section. An inlet 21a for introducing a fluid to be treated is formed in the lower portion of the container 21. A pump 25 is connected to the filter-heat exchanger 20. The fluid to be treated is filled nearly to the upper end wall of the container 21. A coiled hollow wire holder 23 of a short cylindrical configuration closed in its upper and lower end portions by a top plate 23a and a bottom plate 23b is suspended in the fluid to be treated in the container 21 by means of a hollow shaft 24 which extends vertically through an opening 21b formed in the top wall of the container 21 and is fixedly secured at its lower end portion to the top plate 23a of the coiled hollow wire holder 23 and connected at its upper end portion to a suspending section 26 of a frame 27.

A plurality (four in the present embodiment) of coiled hollow wires 22 which are of the same structure as the filter-heat exchanger 6 of Fig. 5 composed of the coiled hollow wedge wire 8 and support rods 7 are secured fixedly to the bottom plate 23b of the coiled hollow wire holder 23 and extend vertically downwardly in a state submerged in the fluid to be treated. The lower end of the coiled hollow wire 22 is closed by a seal plate 28. The open upper end portion of the coiled hollow wires 22 communicates with the inside space of the coiled hollow wire holder 23 and the hollow shaft 24 also communicates with the inside space of the coiled hollow wire holder 23. The hollow shaft 24 extends through the suspending section 26 and a flexible hose 29 which constitutes an outlet of treated fluid is connected to the upper end portion of the hollow shaft 24. In the bottom portion of the container 21 is provided an outlet 30 for removing particles filtered out of the fluid to be treated. The outlet 30 is normally closed.

The coiled hollow wires 22 each have an inlet 22a and an outlet 22b for a heating/cooling fluid which flows through the coiled hollow wires 22. A heating/cooling fluid source 31 which includes a reservoir of the heating/cooling fluid and a pump for feeding the heating/cooling fluid to the coiled hollow wires 22 is connected to the heating/cooling fluid inlet 22a of the coiled hollow wires 22 through a heating/cooling fluid supply tube 32 and connected also to the heating/cooling fluid outlet 22b of the coiled hollow wires 22 through a fluid collecting tube 33. Thus, the heating/cooling fluid is supplied from the heating/cooling fluid source 31 to the coiled hollow wires 22 through the heating/cooling fluid supply tube 32, flows through the coiled hollow wires 22, is collected from the coiled hollow wires 22 through heating/cooling fluid collecting tube 33 and returned to the heating/cooling fluid source 31 for recirculation.

In this embodiment, a temperature controller 34 is provided in the heating/cooling fluid collecting tube 33 for controlling the temperature of the heating/cooling fluid and thereby controlling the width of the slits of the coiled hollow wires 22.

In operation, the pump 25 is operated to introduce the fluid to be treated from the inlet 21a of the container 21 into the respective coiled hollow wires 22. The fluid to be treated flows into the coiled hollow wires 22 and the filtered fluid flows upwardly inside of the coiled hollow wires 22 and flows out of the hose 29 through the inside space of the coiled hollow wire holder 23 and the hollow shaft 24. In the meanwhile, the heating/cooling fluid flows through the recirculation channel composed of the heating/cooling fluid source 31, the supply tube 32, the coiled hollow wires 22 and the collecting tube 33. The temperature of the heating/cooling fluid is controlled by the temperature controller 34 at a proper temperature for maintaining the desired width of the slits of the coiled hollow wires 22.

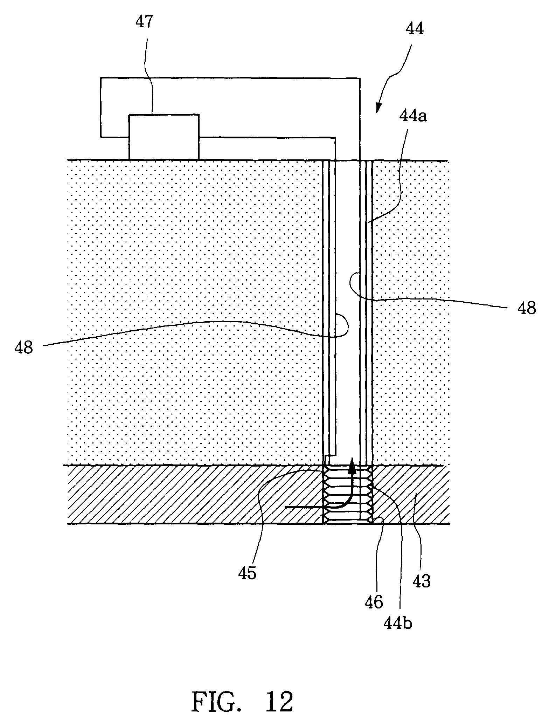

Fig. 12 shows another embodiment of the invention in which the filter-heat exchanger of Fig. 5 is applied to a heavy oil production well.

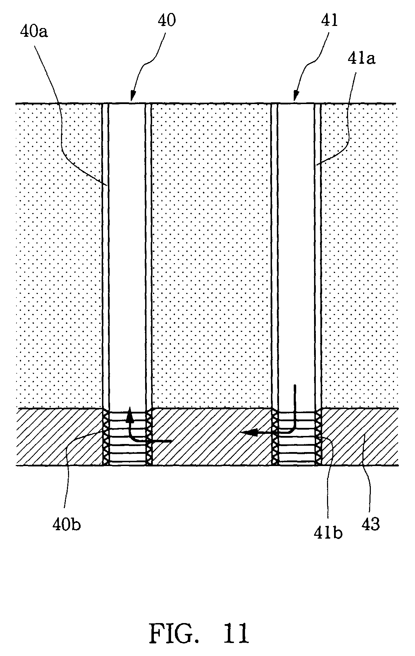

A conventional method for taking out heavy oil from a production well is, as illustrated in Fig. 11, carried out by installing two wells, i.e., a production well 40 and a steam injection well 41 under the ground. The production well has a tube portion 40a and a screen portion 40b which is located below the tube portion 40a and in a heavy oil pay zone 43. The steam injection well 41 has likewise has a tube portion 41a and a screen portion 41b which is located below the tube portion 41a and in the heavy oil pay zone 48.

The heavy oil is so viscous that it does not flow into the production well through slits of the screen portion 40b of the production well 40 as an ordinary oil does. For solving the problem, steam under a high temperature and a high pressure is injected from the steam injection well into the heavy oil pay zone 43 through the screen portion 41b of the steam injection well 41. By virtue of the steam injection, the viscosity of the heavy oil in the heavy oil pay zone 43 is reduced and the less viscous heavy oil can flow into the production well 40 through the screen portion 40b and can be pumped out.

According to the embodiment of Fig. 12, a single projection well 44 suffices and the steam injection well 41 used in the conventional method can be omitted. In the embodiment of Fig. 12, the production well 44 has a tube portion 44a and a screen portion 44b which concurrently serves as a heater. As the screen portion 44b, the filter-heat exchanger shown in Fig. 5 is employed. The screen portion 44b has an inlet 45 and an outlet 46 for a heating fluid such as steam and the inlet 45 and the outlet 46 are connected to a heating fluid supply source 47 through tubing 48 so that the heating fluid recirculates between the heating fluid supply source 47 and the screen portion 44b. Thus, the heavy oil which is heated by the heating fluid circulating though the filter-heat exchanger which constitutes the screen portion 44b become less viscous and flows into the production well 44 though slits of the screen portion 44b.

## Claims

1.  A filter-heat exchanger comprising a plurality of hollow wires arranged in parallel with a slit of a predetermined width formed between adjacent hollow wires, said hollow wires each having an inlet and an outlet for a heating/cooling fluid whereby said heating/cooling fluid flows through said hollow wires and fluid to be filtered flows through said slits from one side of the parallelly arranged hollow wires to the other side thereof.

2.  A filter-heat exchanger as defined in claim 1 wherein said hollow wires are arranged generally in the form of a tube..

3.  A filter-heat exchanger as defined in claim 1 wherein said hollow wires are arranged generally in the form of a flat plate.

4.  A filter-heat excahnger as defined in claim 1 wherein said hollow wires are made of shaped wires.

5.  A filter-heat exchanger as defined in claim 4 wherein said hollow wires are made of wedge wires.

**6.** A filter-heat exchanger as defined in claim 1 which further comprises hollow support rods arranged substantially in crossing direction to the hollow wires, said hollow support rods each having an inlet and an outlet for the heating/cooling fluid whereby the heating/cooling fluid flows also through said hollow support rods.

**7.** A filter-heat exchanger comprising a coiled hollow wire with a helical slit of a predetermined width formed between axially adjacent portions of the hollow wire, said coiled hollow wire having an inlet and an outlet for a heating/cooling fluid whereby said heating/cooling fluid flows through said coiled hollow wire and fluid to be filtered flows through said slit from outside of the coiled hollow wire to inside thereof or vice versa.

**8.** A filter-heat exchanger as defined in claim 7 wherein said coiled hollow wire is made of a shaped wire.

**9.** A filter-heat exchanger as defined in claim 8 wherein said coiled hollow wire is made of a wedge wire.

**10.** A filter-heat exchanger as defined in claim 7 which further comprises hollow support rods arranged substantially in crossing direction to the coiled hollow wire, said hollow support rods each having an inlet and an outlet for the heating/cooling fluid whereby the heating/cooling fluid flows also though said hollow support rods.

**11.** A filter-heat exchanger comrising:

a container having an inlet for introducing a fluid to be filtered;
a coiled hollow wire provided in said container having a helical slit of a predetermined width formed between axially adjacent portions of the hollow wire, having an inlet and and an outlet for a heating/cooling fluid and having an outlet for delivering out treated fluid;
a heating/cooling fluid source connected to the heating/cooling fluid inelt of said coiled hollow wire for supplying the hetaing/cooling fluid to said coiled hollow wire; and
a heating/cooling fluid collecting tube connected to the heating/cooling fluid outlet of said coiled hollow wire for collecting the heating-cooling fluid from said coiled hollow wire.

**12.** A filter-heat exchanger as defined in claim 11 wherein said coiled hollow wire is made of a shaped wire.

**13.** A filter-heat exchanger as defined in claim 12 wherein said coiled hollow wire is made of a wedge wire.

**14.** A filter-heat exchanger as defined in claim 11 which further comprises a temperature control means for controlling the temperature of the heating/cooling fluid for controlling the width of the slit of coiled hollow wire.

FIG. 1

FIG. 2A          FIG. 2B          FIG. 2C

FIG. 2D          FIG. 2E          FIG. 2F

FIG. 3

FIG. 4

FIG. 5

FIG. 6

FIG. 7

FIG. 8

FIG. 9

FIG. 10

FIG. 11

FIG. 12